# EUROPEAN PATENT APPLICATION

(11) **EP 4 600 858 A1**
(43) Date of publication of application: **13.08.2025**
(21) Application number: 24275005.7
(22) Date of filing: 07.02.2024
(51) Int. Cl.: G06F 21/64, H04L 9/40, G06F 21/70, H04L 9/06

(54) **INPUT/OUTPUT INTERFACE FOR USE IN A HIGH INTEGRITY CONTROL SYSTEM FOR USE IN A MARITIME VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An input/output system, the input/output system comprising an input/output interface configured to receive sensor data from a sensor; a safety processing function configured to encode the sensor data using an error detecting and/or correcting process to obtain encoded sensor data; and a communications interface configured to transmit the encoded sensor data to a network controller for further transmission through a communications network, wherein the network controller is remote to the input/output system.

## Description

### FIELD

The present application relates to an input/output system for use in a high integrity control system of a maritime vehicle.

### BACKGROUND

Sensors can be used to monitor processes such as processes which control the operation of a maritime vehicle. In some systems, it may not be practical or safe for a human operator to work near the process being monitored by the sensor. Thus, the sensor data needs to be sent to a second computing system for display to the human operator or to enable control of the process. However, often the process being monitored by the sensor is safety critical. Thus, the integrity of the data being sent by the sensor to the second computing system is important. While it is possible to use high integrity processing functions in all components between the sensor and the second computing system, this can be expensive, impractical and make it harder to replace components which then need to be bespoke.

The embodiments described below are not limited to implementations which solve any or all of the disadvantages discussed above.

### SUMMARY

According to an aspect of the present invention, there is provided an input/output system. The input/output system comprises an input/output interface configured to receive sensor data from a sensor; a safety processing function configured to encode the sensor data using an error detecting and/or correcting process to obtain encoded sensor data; and a communications interface configured to transmit the encoded sensor data to a network controller for further transmission through a communications network, wherein the network controller is remote to the input/output system. While the network controller is remote to the input/output system in that it may comprises a separate device from the input/output system and may not form part of the input/output system, the network controller can be positioned near, adjacent, close to or co-located with the input/output system. By having a safety processing function that encodes the sensor data positioned at the input/output system and thus close to the sensor, any sensor data is encoded for data integrity verification before passing to a network controller or any other network layer components of a computing system. This enables the use of low integrity or commercial off-the-shelf network controllers in systems which require high data integrity.

In some examples, the safety processing function of the input/output system is a high integrity processing function in that the safety processing function carries out processing to a certified integrity level; the safety processing function comprises a hardware secure module; the safety processing function comprises a trusted platform module; the safety processing function comprises a secure hardware, firmware or software enclave; or the safety processing function comprises a secure element or hardware root of trust. These provide example techniques of ensuring that the safety processing function is high integrity and thus ensures the validity of the sensor data and encoded sensor data while/after it has been processed by the safety processing function.

In some examples, encoding the sensor data using an error detecting and/or correcting process to obtain the encoded sensor data comprises at least one of: receiving three or more copies of the sensor data and using the three or more copies of the sensor data as the encoded sensor data; performing a cyclic redundancy check encoding on the sensor data to obtain the encoded sensor data; performing a parity check encoding on the sensor data to obtain the encoded sensor data; performing a mathematical translation on the sensor data to obtained translated sensor data, wherein the encoded sensor data comprises the sensor data and the translated sensor data; obtaining the encoded sensor data by encrypting the sensor data using a first one or more keys; and obtaining the encoded sensor data by signing the sensor data using a key or shared secret. These provide example techniques for encoding sensor data using an error detecting and/or correcting process to allow later data integrity verification.

In some examples, encoding the sensor data using an error detecting and/or correcting process to obtain the encoded sensor data comprises encrypting the sensor data using a first one or more keys to obtain the encoded sensor data. In some examples the encryption comprises a pretty good privacy encryption process.

In some examples, the input/output system comprises a secure computing device and the input/output interface, the safety processing function, and the communications interface comprise modules of the computing device. In some examples, the input/output interface and the communication interface may comprise hardware modules of the computing device while the safety processing function can comprise a hardware, firmware or software module. By having the input/output system comprise a secure computing device, the security of the safety processing function is ensured by the safety processing function being a module of the secure computing device. In some examples the secure computing device carries out processing to a certified integrity level. The input/output system comprising a secure computing device can comprise the computing device of the input/output system being certified to a security standard or integrity level or comprise a secure environment such as a hardware root of trust, secure element, a secure hardware, firmware or software enclave or a trusted platform module. These provide techniques of ensuring the security/integrity of the safety processing function.

In some examples, the sensor data comprises a process variable for a process being monitored by the sensor. For example, the sensor could be monitoring a process such as a process of a maritime vehicle. The sensor data could then comprise a process variable for that process wherein the process variable may comprise safety critical data that needs to be transmitted with high integrity. Hence, the sensor data can be safety critical data with a practical purpose.

In some examples, the input/output system forms part of a computing system that comprises the input/output system and a network controller. The network controller is a lower integrity processing function than the safety processing function; and is a first network controller configured to receive the encoded sensor data from the input/output system and transmit the encoded sensor data to a second network controller via the communications network. The input/output system and network controller may be positioned near the process while, for safety reasons, a human operator/user may be positioned away from the process. In such cases, the first network controller may be used to send the sensor data to the human operator near the second network controller via the communications network. As there is a safety processing function that encodes the sensor data using an error detecting and/or correcting process at the input/output system, the first network controller can be a commercial off-the-shelf network controller or other lower integrity processing function. This enables the first network controller to be easily installed, repaired or replaced as required.

In some examples, the computing system further comprises a second computing system. The second computing system comprises: the second network controller, wherein the second network controller is configured to receive the encoded sensor data from the first network controller and transmit the encoded sensor data to a second secure computing device and the second network controller is remote from the second secure computing device. The second computing system also comprises the second secure computing device, the second secure computing device comprising: a second communications interface configured to receive the encoded sensor data from the second network controller; and a second safety processing function configured to decode the encoded sensor data using the error detecting and/or correcting process to detect and/or correct any errors in the sensor data; wherein the second network controller is a lower integrity processing function than the second secure computing device. While the second network controller is remote to the second computing device in that it comprises a separate device from the second computing device and does not form part of the second computing device, the second network controller can be positioned near, adjacent, close to or co-located with the second computing device.

In some examples the second secure computing device carries out processing to a certified integrity level. By having the receiving end comprise a second network controller and a separate computing device comprising a second safety processing function, it is again possible to use a low integrity or uncertified network controller, for example a commercial off-the-shelf network controller as the receiving end. The data integrity of the encoded sensor data is then verified by the safety processing function at a higher integrity or certified secure computing device which can be used for subsequent data processing. This once again enables the use of standard or commercial off-the-shelf network controllers in safety critical systems that require high data integrity.

In some examples of the computing system, the encoded sensor data comprises three or more copies of the sensor data, and decoding (460) the encoded sensor data comprises performing a redundancy check using the three or more copies of the sensor data, the encoded sensor data comprises sensor data encoded using a cyclic redundancy check encoding, and decoding the encoded sensor data using the error detecting and/or correcting process comprises performing a cyclic redundancy check on the encoded sensor data; or the encoded sensor data comprises sensor data encoded using a parity check encoding, and decoding the encoded sensor data using the error detecting and/or correcting process comprises performing a parity check on the encoded sensor data; or the encoded sensor data comprises the sensor data and translated sensor data that comprises the sensor data after a mathematical translation, and decoding the encoded sensor data using the error detecting and/or correcting process comprises either (a) performing the mathematical translation on the sensor data from the encoded sensor data to obtain second translated sensor data, and comparing the translated sensor data and the second translated sensor data, (b) performing an inverse of the mathematical translation on the translated sensor data to obtain retranslated sensor data, and comparing the retranslated sensor data and the sensor data from the encoded sensor data; or the encoded sensor data comprises the sensor data encrypted using a first one or more keys, and decoding the encoded sensor data using the error detecting and/or correcting process comprises decrypting the encoded sensor data using a second one or more keys corresponding to the first one or more keys; or the encoded sensor data comprises the sensor data signed using a key or shared secret, and decoding (460) the encoded sensor data comprises verifying the signature using the key or shared secret or a second key or shared secret corresponding to the key or shared secret. These provide example techniques for using an error detecting and/or correcting code to detect and/or correct errors in the encoded sensor data. In some examples, the first one or more keys can be the same keys as the second one or more keys. In other examples, the first one or more keys can comprise a public key to encrypt the sensor data and the second one or more keys can comprise a private key to decrypt the encoded sensor data, wherein the private key corresponds to the public key.

In some examples the sensor data is encoded using the error detecting and/or correcting process at the data layer of the input/output system. This enhances the integrity of the sensor data even when lower integrity components are used at the networking layer of the computing system.

In some examples, the communications network is an optical or wired communications network, wherein optionally, the optical or wired communications network is one of: an ethernet based communications network; an RS485 based communications network; an RS422 based communications network; a DSL based communications network; or a device level ring based communications network. The use of a wired or optical communications network ensures data security, speed of transmission and reliability of data transmission.

According to a second aspect of the present invention, there is provided a computer-implemented method implemented at an input/output system, the method comprising: receiving, at an input/output interface of the input/output system, sensor data from a sensor; encoding, at a safety processing function of the input/output system, the sensor data using an error detecting and/or correcting process to obtain encoded sensor data; and transmitting, by a communications interface of the input/put system, the encoded sensor data to a network controller for further transmission through a communications network, wherein the network controller is remote from the input/output system. While the network controller is remote to the input/output system in that it comprises a separate device from the input/output system and does not form part of the input/output system, the network controller can be positioned near, adjacent, close to or co-located with the input/output system. The application relates to a method where sensor data is encoded for data integrity verification close to the sensor at an input/output interface and before any network controllers. This enables the use of low integrity or security network controllers with safety critical information that requires high data integrity.

In some examples, the safety processing function is a high integrity processing function and the network controller is a lower integrity processing function than the safety processing function. Thus, the network controller can be a commercial off-the-shelf network controller which can easily be replaced or repaired enabling easier install and maintenance of the input/output system.

In some examples, encoding the sensor data using an error detecting and/or correcting process to obtain the encoded sensor data comprises at least one of: receiving three or more copies of the sensor data and using the three or more copies of the sensor data as the encoded sensor data; performing a cyclic redundancy check encoding on the sensor data to obtain the encoded sensor data; performing a parity check encoding on the sensor data to obtain the encoded sensor data; performing a mathematical translation on the sensor data to obtained translated sensor data, wherein the encoded sensor data comprises the sensor data and the translated sensor data; obtaining the encoded sensor data by encrypting the sensor data using a first one or more keys; and obtaining the encoded sensor data by signing the sensor data using a key or shared secret. These provide example techniques for encoding sensor data for later data integrity verification.

In some examples, encoding the sensor data using an error detecting and/or correcting process to obtain the encoded sensor data comprises encrypting the sensor data using a first one or more keys to obtain the encoded sensor data. In some examples the encryption comprises a pretty good privacy encryption process.

In some examples, the network controller is a first network controller, and the method further comprises: receiving, at the first network controller, the encoded sensor data from the input/output system; and transmitting, by the first network controller, the encoded sensor data to a second network controller via the communications network. Thus, the encoded sensor data can be sent via a communications network to another computing device via the first and second network controllers.

In some examples, the method further comprises receiving, at the second network controller, the encoded sensor data from the first network controller; transmitting, by the second network controller, the encoded sensor data to a second secure computing device, wherein the second network controller is remote from the second secure computing device; receiving, at a communications interface of the second secure computing device, the encoded sensor data from the second network controller; and decoding, by a second safety processing function of the second secure computing device, the encoded sensor data using the error detecting and/or correcting process to detect and/or correct any errors in the sensor data. Thus, the sensor data can be verified or reobtained at a second secure computing device which is remote from the input/output system while ensuring the integrity of the sensor data. While the second network controller is remote to the second computing device in that it comprises a separate device from the second computing device and does not form part of the second computing device, the second network controller can be positioned near, adjacent, close to, or co-located with the second computing device.

In some examples, the encoded sensor data comprises three or more copies of the sensor data, and decoding the encoded sensor data comprises performing a redundancy check using the three or more copies of the sensor data, the encoded sensor data comprises sensor data encoded using a cyclic redundancy check encoding, and decoding the encoded sensor data using the error detecting and/or correcting process comprises performing a cyclic redundancy check on the encoded sensor data; the encoded sensor data comprises sensor data encoded using a parity check encoding, and decoding the encoded sensor data using the error detecting and/or correcting process comprises performing a parity check on the encoded sensor data; the encoded sensor data comprises the sensor data and translated sensor data that comprises the sensor data after a mathematical translation, and decoding the encoded sensor data using the error detecting and/or correcting process comprises either (a) performing the mathematical translation on the sensor data from the encoded sensor data to obtain second translated sensor data, and comparing the translated sensor data and the second translated sensor data, (b) performing an inverse of the mathematical translation on the translated sensor data to obtain retranslated sensor data, and comparing the retranslated sensor data and the sensor data from the encoded sensor data; the encoded sensor data comprises the sensor data encrypted using a first one or more keys, and decoding the encoded sensor data using the error detecting and/or correcting process comprises decrypting the encoded sensor data using a second one or more keys corresponding to the first one or more keys; or the encoded sensor data comprises the sensor data signed using a key or shared secret, and decoding the encoded sensor data comprises verifying the signature using the key or shared secret or a second key or shared secret corresponding to the key or shared secret. These provide example techniques for verifying the encoded sensor data and detecting and/or correcting errors in the encoded sensor data. In some examples, the first one or more keys can be the same keys as the second one or more keys. In other examples, the first one or more keys can a comprise public key to encrypt the sensor data and the second one or more keys can comprise a private key to decrypt the encoded sensor data, wherein the private key correspond to the public key.

In some examples, the second safety processing function of the second secure computing device is a high integrity processing function and the second network controller is a lower integrity processing function than the second safety processing function of the second secure computing device. Thus, the second network controller may also comprise a standard or commercial off-the-shelf network controller.

In some examples, transmitting, by the first network controller, the encoded sensor data to the second network controller via the communications network comprising transmitting, by the first network controller, the encoded sensor data to the second network controller by an optical or wired communications network. The use of a wired or optical network increases security and also allows for a faster more reliable connection.

In some examples, the sensor data comprises a process variable for a process being monitored by the sensor. Thus, the sensor data can represent data about a safety critical process for example a process in a maritime vehicle such as the operation of the engines or other components of the maritime vehicle.

In some examples, the sensor data is encoded using the error detecting and/or correcting process at the data layer of the input/output system. This enables the use of lower integrity components at the networking layer of the input/output system and any connected computing systems without compromising data integrity.

### BRIEF DESCRIPTION OF THE FIGURES

Embodiments of the invention will now be described by way of example only with reference to the figures, in which:
Figure 1 shows an example input/output system in accordance with the disclosure;
Figure 2 shows an example computing system including an input/output system such as that shown in Figure 1, a network controller and a receiving end computing system;
Figure 3 is a flowchart illustrating a method performed at an input/output system such as that shown in Figure 1;
Figure 4 is a flowchart illustrating a method performed by a network controller and a receiving end system that could form part of the computing system in Figure 2; and
Figure 5 shows an example computing device that can be used as an input/output system or a second computing system/device in accordance with the present application;

Common reference numerals are used throughout the figures to indicate similar features.

### DETAILED DESCRIPTION

In control systems, such as control systems used for maritime vessels sensor data from a sensor often needs to be sent to a distant computing device or control computer for further processing. This is, for example, because the sensor needs to be remote from a human operator for the safety of the human operator. Many processes performed by maritime vessels are safety critical. Therefore, the integrity of data sent from the sensor to the distant computing device needs to be high integrity e.g. the data must not be subject to errors introduced in the transmittal process. While it is possible to ensure this is the case by using high integrity processing components in all part of the control system e.g. the sensor, the networking functionality used to send the data and the distant computing device, this can be expensive and impractical. For example, the need for bespoke components can make repairing or upgrading the control system impractical, expensive and time consuming. The present application overcomes this by introducing a safety processing function in an input/output system containing the input/output interface that obtains the sensor data from a sensor. The safety processing function encodes the sensor data using an error correcting or detecting process before it is processed by a network controller for transmittal to the distant computing device. This can be considered to be encoding the sensor data using an error detecting and/or correcting process at the data layer rather than the transport or network layer. Encoding sensor data at a safety processing function at an input/output interface before processing by a network controller enables any errors introduced by the network controller or other networking components to be detected and/or corrected by the distant computing device. This enables the use of lower integrity, generic or commercial off-the-shelf network controllers in a high integrity control system making the manufacture, maintenance and upgrade of such control systems more practical.

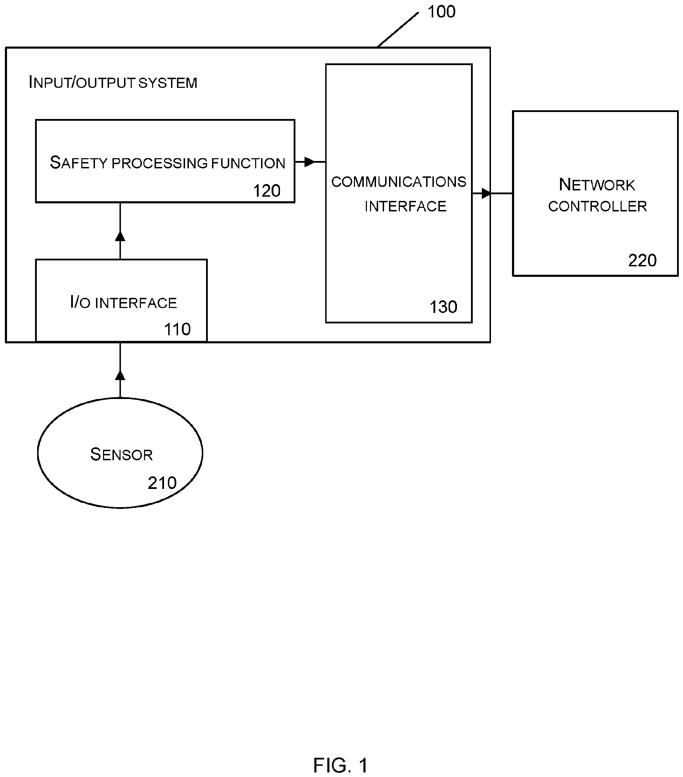

Figure 1 shows an input/output system 100 in accordance with the present invention. The input/output system 100 comprises an input/output interface 110. The input/output interface 110 is configured to receive sensor data from a sensor 210. In some examples, the sensor 210 can form part of the input/output system. However, in other examples, the sensor 210 is separate from the input/output system.

The input/output system 100 also comprises a safety processing function 120. The safety processing function 120 can also be referred to as an error detection encoding function, a data integrity function, or an integrity verification function. The safety processing function 120 is configured to encode the sensor data received from the sensor 210 via the input/output interface 110 using an error detecting and/or error correcting process to form encoded sensor data. The error detecting and/or correcting process can also be referred to as an error detecting and/or correcting code, or an error detecting and/or correcting algorithm.

The input/output system 100 further comprises a communications interface 130. The communications interface 130 can also be referred to as a communications module or a communications function. The communications interface 130 is configured to transit the encoded sensor data to a network controller 220 for further transmission through a communications network. The network controller 220 is remote from the input/output system 100 and comprises a separate computing device that is distinct from the input/output system 100. In some examples the network controller 220 can comprise a commercial off-the-shelf network controller 220 that is not certified to any security standard. While the network controller is remote to the input/output system in that it comprises a separate device from the input/output system and does not form part of the input/output system, the network controller can be positioned near, adjacent, close to or co-located with the input/output system.

By having a safety processing function 120 incorporated into the input/output system 100, the error detecting and/or correcting process is applied close to source of the sensor data e.g. the error detecting and/or correcting process is applied as the next step after receipt of the sensor data from the sensor 210. This ensures that any errors introduced in the transmission of the sensor data either by the communications interface 130 when transmitting to the network controller 220 or by the network controller 220 when transmitting through the communications network can be detected due to the use of the error detecting process and, when an error correcting process is used, corrected. In addition, by incorporating a safety processing function 120 into the input/output system 100, it is possible to use a commercial off-the-shelf network controller 220 or a network controller that is not certified to a security standard without comprising the data integrity of the sensor data. Thus, this enables the use of lower integrity modules such as lower integrity network controllers 220 even when high data integrity is required.

In some examples, the input/output system 100 can comprise a single computing device comprising a processor, and a memory. In this case, the safety process function 120 can comprise a software module on the computing device, for example stored in the memory and executed by the processor, that forms the input/out system 100. The input/output interface 110 and communications interface 130 can comprise hardware modules of the computing device that are controlled by software modules of the computing device. In this case, the functioning of the computing device that forms the input/output system 100 can be high integrity in that the hardware which forms the computing device has been verified according to a security standard, is designed according to security by design principles, and/or carries out processing to a certified integrity level. In some examples, the computing device may comprise a hardware security module, a trusted platform module, a secure hardware, firmware, or software enclave or a secure element or hardware root of trust.

The use of a single device for the input/output system 100 can simplify the system and also reduces the risk of errors in the sensor data between the input/output interface 110 and the safety processing function 120. Such errors may not be detectable since they occur before the safety processing function 120 encodes the sensor data using the error detecting and/or error correcting process.

In other examples, the input/output system 100 can comprise separate modules or devices for each function or some of the functions. For example the safety processing function 120 can comprise a separate device from the input/output interface 110 and the communications interface 130. In this example the safety processing function 120 can comprise a programmable logic controller or other computing device. The safety processing function 120 can comprise any computing device or hardware module that carries out processing to a certified integrity level, which is secure by design principals, and/or which carries out processing to a certified integrity level. For example, the safety processing function 120 can comprise a programmable logic controller or other device which comprises a hardware secure module, a trusted platform module, a secure hardware, firmware or software enclave, or a secure element or a hardware root of trust.

In the examples where the safety processing function 120 is a separate hardware element such as a separate device or hardware module including a programmable logic controller, the input/output interface 120 and communications interface 130 could comprise hardware modules of a same computing device controlled by software on the same computing device or separate hardware modules or devices with each separate hardware module or device having its own software. The communications interface 130, and optionally, the input/output interface 110 may thus be lower integrity hardware/modules/computing devices than the safety processing function 120. In some examples though, the input/output interface 110 may also comprise high integrity processing or form part of the safety processing function 120 to ensure the integrity of the sensor data provided to the safety processing function 120.

The use of a separate module/hardware/computing device for the safety processing function 120 means only the safety processing function, and in some examples, the input/output interface 110 need to operate at high integrity. This enables the use of generic or off -the-shelf communications interfaces 130. This also provides a module input/output system 100 that enables components such as the input/output interface 110 or the communications interface 130 to be updated quickly and easily without needing additional verification or security procedures.

As discussed above, the safety processing function 120 encodes the sensor data using an error correction and/or error detection process, for example an error correction and/or error detection algorithm. Any suitable error detecting and/or correcting process could be used. Examples of known error correcting and/or detecting processes that can be used include cyclic redundancy checks and parity encoding. In addition, the error detecting and/or correcting process can comprise using a first one or more keys to encrypt the sensor data in order to obtain the encoded sensor data. In some examples, when encryption is used, a pretty good privacy encryption process can be used. However, any suitable encryption process that allows data verification could be used as an alternative. Alternatively or in addition, a digital signature process can be used to sign the sensor data to enable future verification of the data, for example, a digital signature process that involves incorporating a hash of the sensor data into the signature. The encoded sensor data can then comprise the sensor data and the signature. The error detecting and/or correcting process can also involve signing the sensor data using a key or shared secret or agreed upon hash function.

Using the above techniques for the error detecting and/or correcting process allows known error detecting and/or correcting processes to be used which can ensure that data integrity if provided to a known standard.

In some examples, the error detecting and/or correcting process additional or alternative comprises receiving three or more copies or versions of the sensor data. In some examples the three or more copies or versions of the sensor can comprise identical sensor data taken at a particular point in time. In other examples, the three or more copies or versions of the sensor data can comprise three separate readings from the sensor taken, in some cases sequentially, within a known time period such that any one reading from the three separate readings can be anticipated from the other readings of the three or more readings. The three or more copies of versions provides redundancy in the sensor data and the three or more copies of versions are used to form the encoded sensor data.

In some examples, the error detecting and/or correcting process additionally or alternatively comprises performing one or more mathematical translations/functions on the sensor data to obtain translated/transformed sensor data. For example, the mathematical translations/functions could comprise performing a sine function or other trimetric function, a square function, a log function, or another power function on the sensor data, or adding or subtracting a value from the sensor data. When the sensor data is a signal within a range of values then the mathematical translation/function can be applied to the value of the signal. When the sensor data is binary or discrete data then multiple binary or discrete values can be grouped and then the mathematical translation/function applied to the group. The encoded sensor data can then comprise the sensor data and the translated/transformed sensor data. As discussed later, this can then be verified at a receiving end either by performing the mathematical translation/function on the sensor data from the encoded sensor data and confirming it matches the translated/transformed sensor data of the encoded sensor data or by performing an inverse function on the translated/transformed sensor data from the encoded sensor and confirming it matches the sensor data from the encoded sensor data.

The above technique provides an alternative or additional way to verify data integrity which can be used to enhance data integrity verification and implement the error detecting and/or correcting process.

All the above techniques for implementing the error detecting and/or correcting process can be used separately or can be combined in any combination to increase the chances of errors being detected and/or corrected.

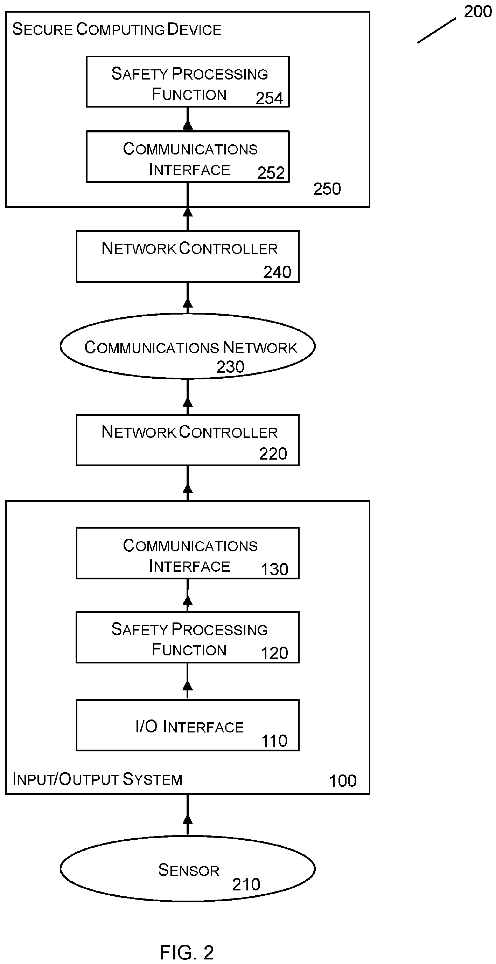

As shown in Figure 2, the input/output system 100 described above can form part of a wider computing system 200. In Figure 2 reference numerals using the same number as Figure 1 have the same meaning.

The computer system 200 comprises an input/output system 100 as described above. The input/output system 100 comprises an input/output interface 110, a safety processing function 120 and a communications interface 130.

The computer system 200 also comprises a network controller 220 wherein the network controller 220 is remote from the input/output system 100. The network controller 200 is, in some examples, a lower integrity processing function than the safety processing function 120 in that as the encoding/protection of the sensor data has been moved to occur at the input/output system 100, the network controller 220 does not need to have high integrity processing to ensure the validity of the sensor data. However, while the network controller 220 can be a lower integrity processing component, a high integrity processing function could also be used. The network controller 220 comprising a lower integrity processing function than the safety processing function 120 can comprise the network controller 220 not being certified at any security standard. In some examples, the network controller 220 can comprise a commercial off-the-shelf network controller. Thus, the movement of the encoding of the sensor data to the input/output system 100 enables the use of easily available commercial network controllers 220 rather than requiring bespoke network controllers 220 for sensor data that needs to be transmitted with high data integrity.

The network controller 220 receives the encoded sensor data from the communications interface 130 of the input/output system. The network controller 220 then sends/transmits the encoded sensor data to a second network controller 240 via a communications network 230. The network controller 220 therefore acts as a device to send and, in some examples, receive encoded data such as encoded sensor data via the communications network 230. Any suitable network controller 220 or 240 may be used including commercial off-the-shelf network controllers.

The communications network 230 may be a wired or optical communications network. This can ensure the security of the data in the communications network and increase the reliability and speed of the transmittal/receipt of data. However, in other examples, a wireless communications work 230 may be used. Any suitable form of wired or optical communications network 230 may be used. However, examples include an ethernet based communications network, an RS485 based communications network, an RS422 based communications network, a DSL based communications network, and a device level ring based communications work. The communications network 230 may or may not use protocols such as MODBus, PROFISafe, PROFINET or any other serial bus mechanism.

In some examples the network controller 230 and the second network controller 240 may be able to send and receive on multiple different forms of network encoding/networking technologies. This increases the flexibility in how the encoded sensor data is transmitted.

The computing system 200 may also comprise a receiving end for the encoded sensor data. In other words, the computing system 200 may further comprise the second network controller 240 and a second secure computing device or system 250, wherein the second network controller 240 is remote from the second secure computing device or system 250. While the second network controller 250 is remote to the second computing device 250 in that it comprises a separate device from the second computing device 250 and does not form part of the second computing device 250, the second network controller 240 can be positioned near, adjacent, close to, or co-located with the second computing device 250.

The second network controller 240 can be a lower integrity processing function that the second secure computing device 250. Hence, the second network controller 240 can be a commercial off-the-shelf network controller or a network controller that it not certified to any security standard. This enables easy replacement of the network controller when required. In addition, this enables the computing system 200 to be built without a requirement for specialist network controllers.

The second secure computing device 250 comprises a second communications interface 252 and a second safety processing function 254. The second communications interface 252 receives the encoded sensor data from the second network controller 240 and passes the encoded sensor data to the second safety processing function 254. The second safety processing function 254 decodes the encoded safety data using that error correcting and/or detecting process to obtain the sensor data and determine/correct any errors in the sensor data.

The second communications interface 252 can also be referred to as a second communications module or a second communications function. While forming part of secure computing device or system 250, the second communications interface 252 does not itself need to be a high integrity computing function since the second communications function processes the encoded sensor data before it has been decoded. Thus, any errors the second communications interface 252 introduces to the encoded sensor data can be detected and/or corrected at the decoding stage performed by the second safety processing function 254.

The second safety processing function 254 can also be referred to as an error detection/correction decoding function, a data integrity function, or an integrity verification function. The second safety processing function 254 is a high integrity or secure computing process function. To this end, the second secure computing device or system 250 may comprise a high integrity computing device. This may involve the computing device being certified to a security standard or the integrity and/or accuracy of the processing of the computing device being guaranteed or certified in another way. Alternatively, the second safety processing function 254 can comprise a secure software and/or hardware module that forms part of the second secure computing device or system 250. To this end, the second safety processing function can comprise a hardware security module, a trusted platform module, a secure hardware, firmware or software enclave or a secure element and/or a hardware root of trust.

The second safety processing function 254 decodes the encoded sensor data using the error detecting and/or correcting process. This decoding process enables the detection and in some cases correction of any errors in the encoded sensor data. Where the encoded sensor data does not comprise the sensor data itself in that it comprises an encrypted or otherwise transformed version of the sensor data, this decoding process also returns the sensor data from the transformed version of the sensor data. The decoding process used depends upon the form of the error detecting and/or correcting process. Any suitable decoding process that matches the encoding process for the error detecting and/or correcting process can be used.

In examples where encoding the sensor data comprises using a cyclic redundancy check and the encoded sensor data thus comprises sensor data encoded using a cyclic redundancy check encoding, then decoding the encoded sensor data comprises performing a cyclic redundancy check on the encoded sensor data. The skilled person would be familiar with cyclic redundancy checks and their implementation and would be able to implement both the encoding and decoding stages of such an error detecting process.

In examples where encoding the sensor data comprises performing a parity check encoding and the encoded sensor data thus comprises sensor data encoded using a party check encoding, then decoding the encoded sensor data comprises performing a parity encoding check on the encoded sensor data. In some examples, the parity encoding may be an error detection only encoding in which case the second safety processing function 254 can determine there is an error in the sensor data and ensure the secure computing device 250 does not use the sensor data further. In addition, the second safety processing function 254 may send a request to the input/output system 100 to either resend or retake the sensor data. In other examples, the parity check encoding can comprise a code word parity check encoding or other form of parity check encoding that enables error correction. In this case the decoding the encoded sensor data using the parity check comprises using the error correcting version of the parity check to correct any errors in the sensor data. The skilled person would be familiar with both error detecting and error detecting and correcting parity checks and how to implement both their encoding and decoding.

In some examples encoding using the error detecting and/or correcting code comprises receiving three or more copies or versions of the sensor data and the encoded sensor data comprises the three or more versions of the sensor data. In these examples, decoding the encodes sensor data comprises comparing the three or more copies or versions of the sensor data to identify any errors for example by confirming all three or more copies or versions agree or using a majority vote process to perform error correction. In examples where the three or more copies or versions of the sensor data are not identical but are three or more copies or versions taken over a time period, this can involve extrapolating one or more versions of the sensor data from the other versions of the sensor data as part of the confirmation the versions agree or majority vote process or by using a Mid Value Select process.

In examples where encoding using the error detecting and/or correcting code comprises performing one or more mathematical translations on the sensor data then the encoded sensor data comprises the sensor data and the translated sensor data. Thus, the second safety processing function 254 receives received sensor data and received translated sensor data. In this example, decoding the encoded sensor data comprises either (a) using the error detecting and/or correcting code to perform the mathematical translation of the received sensor data to obtain translated received sensor data and then comparing the translated received sensor data to the received translated sensor data to confirm they are the same; or (b) using the error detecting and/or correcting code to perform an inverse translation on the received translated sensor data to obtain retranslated sensor data (which can otherwise be known as untranslated or detranslated sensor data) and then comparing this retranslated sensor data with the received sensor data. In either case, if the comparison indicates a match, the safety processing function 254 can verify the integrity of the received sensor data indicating there are no errors. If the translated received sensor data and the received translated sensor data or the retranslated sensor data and the received sensor data do not match, then it is determined there is an error in the received sensor data. In some examples, the received translated sensor data can be used to correct this error. In addition, or as an alternative, the safety processing function 254 can re-request the sensor data from the input/output system 100 which can then either resend or retake the data.

In examples where encoding the sensor data using the error detecting and/or correcting code comprises encrypting the sensor data using a first one or more keys and the sensor data comprises the sensor data encrypted using the first one or more keys, then decoding the sensor data using the error detecting and/or correcting code comprises decrypting the encoded sensor data using a second one more keys that corresponds to the first one or more keys. The skilled person would be aware of encryption processes that also enable data integrity verification and hence error detection. For example, the encryption and decryption could be a pretty good privacy encryption/decryption process which would enable error detection. In addition, a digital signature process could be used. The skilled person would understand that other encryption and decryption protocols could be used for error detection. In some examples, the first one or more keys can be the same keys as the second one or more keys. In other examples, the first one or more keys can comprise a public key to encrypt the sensor data and the second one or more keys can comprise a private key to decrypt the encoded sensor data, wherein the private key corresponds to the public key.

In examples where encoding the sensor data using the error detecting and/or correcting code comprises signing the sensor data using a key or shared secret or shared hash and the encoded sensor data comprises the sensor data signed using the key or shared secret or shared hash such that the encoded sensor data comprises the sensor data and a signature, then decoding the encoded sensor data comprises verifying the signature using the key or shared secret or shared hash or a second key or shared secret corresponding to the key or shared secret. If the signature cannot be verified due to changes in the sensor data, then the second safety processing function 254 can establish an error in the sensor data and rerequest the sensor data from the input/output system 100 which can then either resend or retake the sensor data. In addition, or as an alternative, some signature processes may enable correction of any error in the sensor data as would be known to the skilled person.

In all examples, if an error is detected in the encoded sensor data, then the safety processing function 254 can either use an error correcting portion of the error detecting and correcting process to correct the error or rerequest the sensor data from the input/output system 100. In response to such a request for sensor data the input/output system 100 can either resend the sensor data or retake and then send new sensor data. One or both of these procedures may be repeated until verified sensor data is obtained.

In contrast, if no error is detected in the encoded sensor data then the safety processing function 254 can either use the sensor data as verified sensor data or perform any necessary processing of the error detecting and correcting process to reobtain the sensor data from the encoded sensor data which can then be used as verified sensor data.

Once the verified sensor data has been obtained it can the be used for further processing. For example, the safety processing function 254 or another software or hardware module of the second secure computing device or system 250 may further process the verified sensor data to perform any actions necessary based on the sensor data or to confirm no action is necessary. Alternatively, the second secure computing device or system 250 may pass the verified sensor data onto another computing device for further processing. In addition, or as an alternative the verified sensor data can be output to a user or operator to enable the user/operator to identify any errors in the process or confirm the operation of the process.

The input/output system 100 and the computing system 200 it forms part of can be part of a process control loop or a safety critical control system. Thus, the sensor data can comprise a process variable for the process being implemented. For example, the input/output system 100 may be used in a platform management system of a maritime vessel such as a boat or submarine. The sensor 210 may be monitoring a process performed by an engine, pump, hydroplane or valve in a platform management system of a maritime vessel, for example, the sensor 210 may be monitoring a liquid level such as a tank level, pressure, temperature, or fire control valve positions etc. Other variables monitored can include positions, speeds, rates, forces, strains, pressures and temperatures.

Practical and safety constraints may prevent a human operator from being positioned near or in the control plant or platform management system of a maritime vessel. Thus, the sensor data needs to be transmitted to another computing device for processing and/or display to a human operator. Hence, the input/output system 100 and the network controller 220 can be positioned at or in the control plant or platform management system and the encoded sensor data can be transmitted via the communications network to the second network controller 240 and second secure computing device or system 250 in a control room or at some other control point. Given the processes being monitored are often safety critical, the integrity of the sensor data is important. In addition, it is desirable to use commercial off-the-shelf components where possible to increase ease of installation and maintenance or upgrade. In the present application, the sensor data is encoded using the error correcting or detecting process at the input/output system 100 and before reaching the network controller 220. This enables the use of a commercial off-the-shelf network controller 220. In addition, this means that any errors introduced by the network controller 220 or communications interface 130 can be detected and possible corrected.

Having the safety processing function 120 incorporated into the input/output system 100 also means that the sensor data is encoded using the detecting and/or correcting process at the data layer of the input/output system 100 or computing system 200 rather than the transport or network layer. This ensures the integrity of the encoded sensor data as it traverses the transport or network layer of the input/out system 100 or computing system 200.

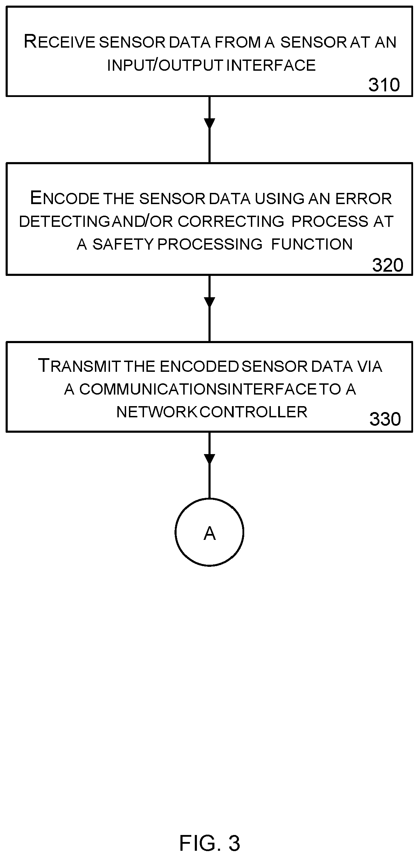

Turning now to Figure 3, an example method 300 is disclosed. At step 310, the method comprises receiving sensor data from a sensor 210 at an input/output interface 110 of an input/output system 100. The input/output system 100 can comprise the input/output system 100 as described above and can form part of computing system 200 described above.

The method then comprises at step 320 encoding at a safety processing function 120 of the input/output system 100 the sensor data using an error detecting or correcting process to obtain encoded sensor data. The safety processing function 120 can comprise the safety processing function 120 described above and the encoding using an error detecting or correcting process can be performed as described above, for example using a cyclic redundancy check, a parity check, a mathematical translation or by encrypting the sensor data using a first one or more keys, and/or signing the sensor data using a key or shared secret.

At step 330, the encoded sensor data is then sent by a communications interface 130 of the input/output system 100 to a network controller 220 for further transmission through a communications network 230. As the encoded sensor data is already encoded before it is sent to the network controller 220, the network controller 220 can be a lower integrity processing function than the safety processing function 120 since any errors introduced by the network controller 220 can be detected and/or corrected. This enables the use of, for example, commercial off-the-shelf network controllers or other generic network controllers and reduces the need for specialist hardware in all parts of the control system.

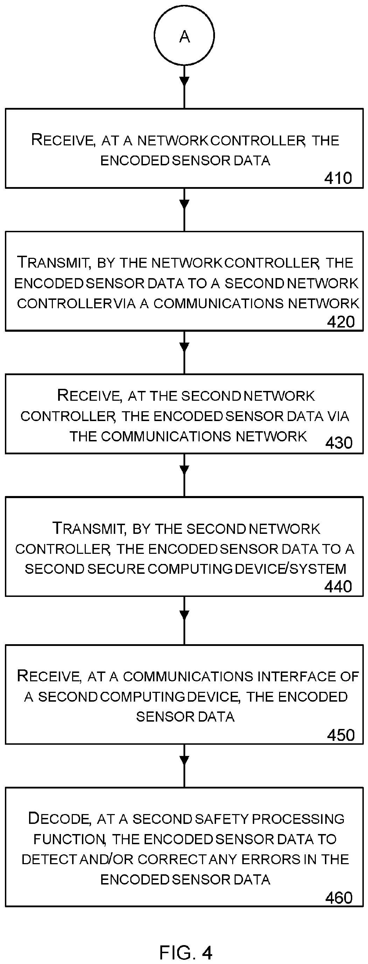

Figure 4 shows a method 400 that can be implemented by computing system 200. Method 400 follows method 300. In other words, input/output system 100 implements method 300 and the encoded sensor data is then passed to network controller 220 that is part of computer system 200 which starts method 400.

At step 410, the network controller 220 receives the encoded sensor data from the communications interface 130 of the input/output interface 100 and at step 420, the network controller 220 transmits the encoded sensor data to a second network controller 240 via a communications network 230. As discussed above, the communications network 230 can be a wired or optical communications network that connects the network controller 220 to the second network controller 240.

At step 430, the second network controller 240 receives the encoded sensor data from the network controller 220 via the communications network 230 and at step 440, the second network controller 240 transmits the encoded sensor data to a second secure computing device or system 250. At step 450, a communications interface of the secure computing device or system 250 receives the encoded sensor data from the second network controller 240.

At step 460, a safety processing function 254 of the secure computing device or system 250 decodes the encoded sensor data to detect and/or correct any errors in the encoded sensor data. The encoded sensor data is decoded using the appropriate decoding portion of the error detecting and/or correcting process. Where appropriate, the decoding the encoded sensor data also comprises obtaining the sensor data (or a copy of the sensor data) from the encoded sensor data. The sensor data either verified or obtained by decoding the encoded sensor data using the error detecting and/or correcting process can then be further processed by the second secure computing device or system 250 or output by a display device of the second secure computing device or system 250 for presentation to a user/operator. For example, the sensor data could be processed by the second secure computing device or system 250 to determine whether an alarm condition has been met, at which point an alarm may be triggered. In addition or as an alternative, the sensor data could be processed by the second secure computing device or system 250 to determine a change should be made to the process or operation being monitored by the sensor 210 in which case the second secure computing device or system 250 can either automatically trigger an action to ensure the change is made or output a display to the user/operator indicating the action that should be taken to cause the change.

The input/output system 100, the network controller 220, the second network controller 240, and the second secure computing device/system 250 may be in a single environment e.g. in a maritime vehicle with the input/output system 100 and first network controller 220 being in for example a control plant or platform management system that is inaccessible to a human operator. The second network controller 240 and second secure computing device/system 250 may then be in a control room or other area accessible to the human operator and connected to the first network controller 220 via the wired or optical communications network 230. This enables secure transfer of data from the input/output system 100 to the secure computing device/system 250 for further processing. In addition, the use of safety processing functions 120 and 254 at the input/output system 100 and the secure computing device/system 250 enables commercial off-the-shelf network controllers that are not subject to any security certification to be used with sensor data that needs to be high integrity due to its safety critical nature.

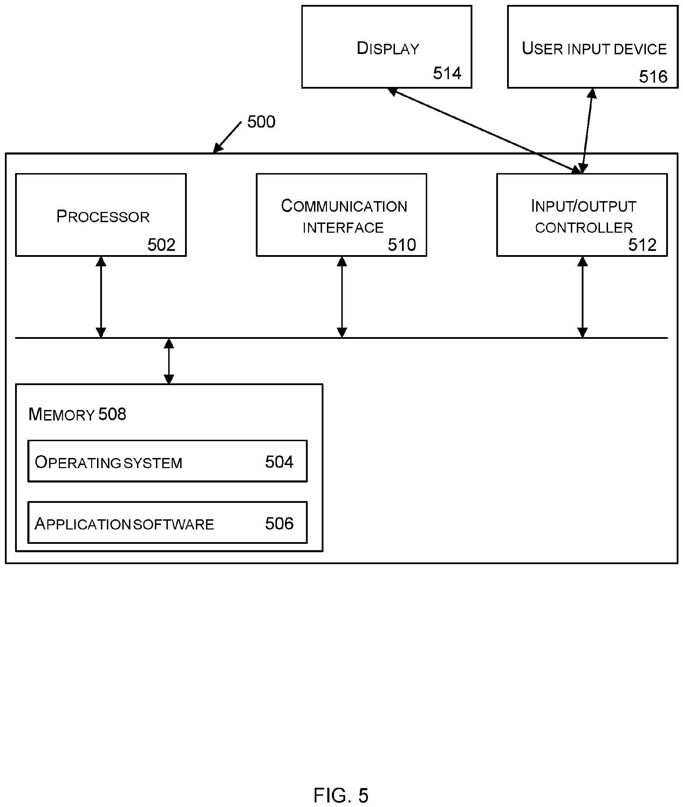

Figure 5 illustrates various components of an exemplary computing-based device 500 which may be implemented as any form of a computing and/or electronic device, and in which embodiments of input/output interface 100, first network controller 220, second network controller 240 and secure computing device 250 may be implemented.

Computing-based device 500 comprises one or more processors 502 which may be microprocessors, controllers or any other suitable type of processors for processing computer executable instructions to control the operation of the device in order to implement a method in accordance with Figure 3 or Figure 4. In some examples, for example where a system on a chip architecture is used, the processors 502 may include one or more fixed function blocks (also referred to as accelerators) which implement a part of the method of Figures 3 or 4 in hardware (rather than software or firmware). Platform software comprising an operating system 504 or any other suitable platform software may be provided at the computing-based device to enable application software 506 to be executed on the device.

The computer executable instructions may be provided using any computer-readable media that is accessible by computing based device 500. Computer-readable media may include, for example, computer storage media such as memory 508 and communications media. Computer storage media, such as memory 508, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 508) is shown within the computing-based device 500 it will be appreciated that the storage may be distributed or located remotely and accessed via a network or other communication link (e.g. using communication interface 510).

The computing-based device 500 also comprises an input/output controller 512, which in the case of second computing device/system 250 can be arranged to output display information to a display device 514 which may be separate from or integral to the computing-based device 500. The display information may provide a graphical user interface. The input/output controller 512 is also arranged to receive and process input from one or more devices, such as, in the case of second computing device/system 250, a user input device 516 (e.g. a mouse or a keyboard). This user input may be used to instruct the computing-based device 500 to perform actions based on the sensor data. In an embodiment the display device 514 may also act as the user input device 516 if it is a touch sensitive display device. The input/output controller 512 may also output data to devices other than the display device, e.g. a locally connected printing device (not shown in Figure 5). In the case of input/output device 500, the input/output controller 512 can be configured to control the input/output interface 110 to receive sensor data from sensor 210 and the communications interface 130 to send encoded sensor data to the network controller 220.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of the claims.

## Claims

1. An input/output system (100), the input/output system (100) comprising:
an input/output interface (110) configured to receive (310) sensor data from a sensor (210);
a safety processing function (120) configured to encode (320) the sensor data using an error detecting and/or correcting process to obtain encoded sensor data; and
a communications interface (130) configured to transmit (330) the encoded sensor data to a network controller (220) for further transmission through a communications network (230), wherein the network controller (220) is remote to the input/output system (100).

2. The input/output system (100) of claim 1, wherein the safety processing function (120) is a high integrity processing function in that:
the safety processing function (120) carries out processing to a certified integrity level;
the safety processing function (120) comprises a hardware secure module;
the safety processing function (120) comprises a trusted platform module;
the safety processing function (120) comprises a secure hardware, firmware or software enclave; or
the safety processing function (120) comprises a secure element or hardware root of trust.

3. The input/output system (100) of claim 1 or claim 2, wherein encoding (320) the sensor data using an error detecting and/or correcting process to obtain the encoded sensor data comprises at least one of:
receiving three or more copies of the sensor data and using the three or more copies of the sensor data as the encoded sensor data;
performing a cyclic redundancy check encoding on the sensor data to obtain the encoded sensor data;
performing a parity check encoding on the sensor data to obtain the encoded sensor data;
performing a mathematical translation on the sensor data to obtained translated sensor data, wherein the encoded sensor data comprises the sensor data and the translated sensor data;
obtaining the encoded sensor data by encrypting using a first one or more keys; and
obtaining the encoded sensor data by signing the sensor data using a key or shared secret.

4. The input/output system (100) of any previous claim, wherein:
the input/output system (100) comprises a secure computing device;
the input/output interface (110), the safety processing function (120), and the communications interface (130) comprise modules of the computing device.

5. The input/output system (100) of claim 4, wherein the secure computing device carries out processing to a certified integrity level.

6. The input/output system (100) of any previous claim wherein:
the sensor data is encoded using the error detecting and/or correcting process at the data layer of the input/output system (100).

7. A computing system (200) comprising:
the input/output system (100) of any previous claim; and
the network controller (220), wherein:
the network controller (220) is a lower integrity processing function than the safety processing function (120); and
the network controller (220) is a first network controller and is configured to receive (410) the encoded sensor data from the input/output system (100) and transmit (420) the encoded sensor data to a second network controller (240) via the communications network (230).

8. The computing system (200) of claim 7, further comprises a second computing system, wherein the second computing system comprises:
the second network controller (240), wherein the second network controller (240) is configured to receive (430) the encoded sensor data from the first network controller (220) and transmit (440) the encoded sensor data to a second secure computing device (250), wherein the second network controller (240) is remote from the second secure computing device (250); and
the second secure computing device (250), the second secure computing device (250) comprising:
a second communications interface (252) configured to receive (450) the encoded sensor data from the second network controller (240); and
a second safety processing function (254) configured to decode (460) the encoded sensor data using the error detecting and/or correcting process to detect and/or correct any errors in the sensor data;
wherein the second network controller (240) is a lower integrity processing function than the second secure computing device (250).

9. The computing system (200) of claim 8, wherein:
the encoded sensor data comprises three or more copies of the sensor data, and decoding (460) the encoded sensor data comprises performing a redundancy check using the three or more copies of the sensor data;
the encoded sensor data comprises sensor data encoded using a cyclic redundancy check encoding, and decoding (460) the encoded sensor data using the error detecting and/or correcting process comprises performing a cyclic redundancy check on the encoded sensor data;
the encoded sensor data comprises sensor data encoded using a parity check encoding, and decoding (460) the encoded sensor data using the error detecting and/or correcting process comprises performing a parity check on the encoded sensor data;
the encoded sensor data comprises the sensor data and translated sensor data that comprises the sensor data after a mathematical translation, and decoding (460) the encoded sensor data using the error detecting and/or correcting process comprises either (a) performing the mathematical translation on the sensor data from the encoded sensor data to obtain second translated sensor data, and comparing the translated sensor data and the second translated sensor data, (b) performing an inverse of the mathematical translation on the translated sensor data to obtain retranslated sensor data, and comparing the retranslated sensor data and the sensor data from the encoded sensor data;
the encoded sensor data comprises the sensor data encrypted using a first one or more keys, and decoding (460) the encoded sensor data using the error detecting and/or correcting process comprises decrypting the encoded sensor data using a second one or more keys corresponding to the first one or more keys; or
the encoded sensor data comprises the sensor data signed using a key or shared secret, and decoding (460) the encoded sensor data comprises verifying the signature using the key or shared secret or a second key or shared secret corresponding to the key or shared secret.

10. A computer-implemented method (300) implemented at an input/output system (100), the method comprising:
receiving (310), at an input/output interface (110) of the input/output system (100), sensor data from a sensor (210);
encoding (320), at a safety processing function (120) of the input/output system (100), the sensor data using an error detecting and/or correcting process to obtain encoded sensor data; and
transmitting (330), by a communications interface (130) of the input/put system (100), the encoded sensor data to a network controller (220) for further transmission through a communications network (230), wherein the network controller (220) is remote from the input/output system (100).

11. The computer-implemented method (300) of claim 10, wherein the safety processing function (120) is a high integrity processing function and the network controller (220) is a lower integrity processing function than the safety processing function (120).

12. The computer-implemented method (300) of claim 10 or claim 11, wherein encoding (320) the sensor data using an error detecting and/or correcting process to obtain the encoded sensor data comprises at least one of:
receiving three or more copies of the sensor data and using the three or more copies of the sensor data as the encoded sensor data;
performing a cyclic redundancy check encoding on the sensor data to obtain the encoded sensor data;
performing a parity check encoding on the sensor data to obtain the encoded sensor data;
performing a mathematical translation on the sensor data to obtained translated sensor data, wherein the encoded sensor data comprises the sensor data and the translated sensor data;
obtaining the encoded sensor data by encrypting and/or signing the sensor data using a first one or more keys; and
obtaining the encoded sensor data by signing the sensor data using a key or shared secret.

13. The computer-implemented method (300; 400) of any of claims 10 to 12, wherein the network controller (220) is a first network controller (220), and the method further comprises:
receiving (410), at the first network controller (220), the encoded sensor data from the input/output system (110); and
transmitting (420), by the first network controller (220), the encoded sensor data to a second network controller (240) via the communications network (230).

14. The computer-implemented method (300; 400) of claim 13, further comprising:
receiving (430), at the second network controller (240), the encoded sensor data from the first network controller (220);
transmitting (440), by the second network controller (240), the encoded sensor data to a second secure computing device (250), wherein the second network controller (240) is remote from the second secure computing device (250);
receiving (450), at a communications interface (252) of the second secure computing device (250), the encoded sensor data from the second network controller (240); and
decoding (460), by a second safety processing function (254) of the second secure computing device (250), the encoded sensor data using the error detecting and/or correcting process to detect and/or correct any errors in the sensor data.

15. The computer-implemented method (300; 400) of claim 14 wherein:
the encoded sensor data comprises three or more copies of the sensor data, and decoding (460) the encoded sensor data comprises performing a redundancy check using the three or more copies of the sensor data;
the encoded sensor data comprises sensor data encoded using a cyclic redundancy check encoding, and decoding (460) the encoded sensor data using the error detecting and/or correcting process comprises performing a cyclic redundancy check on the encoded sensor data;
the encoded sensor data comprises sensor data encoded using a parity check encoding, and decoding (460) the encoded sensor data using the error detecting and/or correcting process comprises performing a parity check on the encoded sensor data;
the encoded sensor data comprises the sensor data and translated sensor data that comprises the sensor data after a mathematical translation, and decoding (460) the encoded sensor data using the error detecting and/or correcting process comprises either (a) performing the mathematical translation on the sensor data from the encoded sensor data to obtain second translated sensor data, and comparing the translated sensor data and the second translated sensor data, (b) performing an inverse of the mathematical translation on the translated sensor data to obtain retranslated sensor data, and comparing the retranslated sensor data and the sensor data from the encoded sensor data;
the encoded sensor data comprises the sensor data encrypted using a first one or more keys, and decoding (460) the encoded sensor data using the error detecting and/or correcting process comprises decrypting the encoded sensor data using a second one or more keys corresponding to the first one or more keys; or
the encoded sensor data comprises the sensor data signed using a key or shared secret, and decoding (460) the encoded sensor data comprises verifying the signature using the key or shared secret or a second key or shared secret corresponding to the key or shared secret.
